# EUROPEAN PATENT APPLICATION

(11) **EP 4 459 845 A1**
(43) Date of publication of application: **06.11.2024**
(21) Application number: 24168314.3
(22) Date of filing: 03.04.2024
(51) Int. Cl.: H02K 1/2791, H02K 7/14, H02K 9/06

(54) **ROTOR AND ELECTRIC MOTOR ASSEMBLY**

(30) Priority: 06.04.2023 US 202363457566 P
(71) Applicant: Techtronic Cordless GP, Anderson, SC 29621 (US)
(72) Inventor: DUNSTON, Jarrett, Anderson, 29621 (US); TAREK, Md Tawhid Bin, Anderson, 29621 (US); RADIVOYEVITCH, Cody, Anderson, 29621 (US)
(74) Representative: Novagraaf Group

(57) **Abstract**

An electric motor assembly and a rotor for an electric motor are provided. A rotor includes a yoke, and a plurality of magnets held by the yoke. The yoke is formed from a plurality of laminations. The yoke includes an inner peripheral surface surrounding a cavity. The inner peripheral surface has a plurality of rectangular cutout sections that are each configured to receive a respective magnet of the plurality of magnets. The inner peripheral surface further includes a protrusion extending toward the cavity, and each protrusion having a flat surface facing the cavity.

## Description

### FIELD

The present disclosure relates generally to an electric motor assembly, and in particular, the rotor structure of an electric motor assembly.

### BACKGROUND

Brushless direct current (DC) motors, or BLDC motors, have been widely used in electric appliances such as power tools. In a BLDC motor, an electrical motor controller, usually in the form of a semiconductor circuit or microcontroller, takes the role to continually switch the phase to the windings in the motor stator to keep the rotor of the motor turning. Brushless motors offer many advantages over brushed DC motors, including high torque to weight ratio, more torque per watt (increased efficiency), increased reliability, reduced noise, and longer lifetime as compared to brushed motors. Brushless motors are particularly useful for applications where high output speed is required.

However, traditional brushless motors suffer from certain disadvantages. For example, the moving rotor of a BLDC has permanent magnets which have to be mounted in or on a yoke of the rotor, which may add weight and/or influence the magnetic flux of the rotor. Furthermore, depending on the operating conditions, it is frequently necessary for the permanent magnets to be protected against environmental conditions such as e.g., moisture and corrosive media. Moreover, many brushless motors implement rare earth permanent magnets, which can increase the cost of manufacturing the electric motor assembly.

Accordingly, improved electric motor assemblies and rotors therefore are desired in the art. In particular, a rotor which has lighter weight and lower cost to manufacture would be advantageous.

### BRIEF DESCRIPTION

Aspects and advantages of the invention in accordance with the present disclosure will be set forth in part in the following description, or may be obvious from the description, or may be learned through practice of the technology.

In accordance with one embodiment, a rotor is provided. The rotor includes a yoke, and a plurality of magnets held by the yoke. The yoke is formed from a plurality of laminations. The yoke includes an inner peripheral surface surrounding a cavity. The inner peripheral surface has a plurality of rectangular cut-out sections that are each configured to receive a respective magnet of the plurality of magnets. The inner peripheral surface further includes a protrusion extending toward the cavity, and each protrusion having a flat surface facing the cavity.

In accordance with another embodiment, an electric motor assembly is provided. The electric motor assembly includes a motor shaft; a printed circuit board (PCB); a stator; and a rotor fixed to the motor shaft. The rotor includes a yoke, and a plurality of magnets held by the yoke. The yoke is formed from a plurality of laminations. The yoke includes an inner peripheral surface surrounding a cavity. The inner peripheral surface has a plurality of rectangular cut-out sections that are each configured to receive a respective magnet of the plurality of magnets. The inner peripheral surface further includes a protrusion extending toward the cavity, and each protrusion having a flat surface facing the cavity.

These and other features, aspects and advantages of the present invention will become better understood with reference to the following description and appended claims. The accompanying drawings, which are incorporated in and constitute a part of this specification, illustrate embodiments of the technology and, together with the description, serve to explain the principles of the technology.

### BRIEF DESCRIPTION OF THE DRAWINGS

A full and enabling disclosure of the present invention, including the best mode of making and using the present systems and methods, directed to one of ordinary skill in the art, is set forth in the specification, which makes reference to the appended figures, in which:
FIG. 1 is a perspective view of an electric motor assembly in accordance with embodiments of the present disclosure;
FIG. 2 is a side view of an electric motor assembly in accordance with embodiments of the present disclosure;
FIG. 3 is a cross-sectional view of a rotor and stator of an electric motor assembly in accordance with embodiments of the present disclosure;
FIG. 4 is a cross-sectional view of an embodiment of a rotor yoke in accordance with embodiments of the present disclosure; and
FIG. 5 is a cross-sectional view of an embodiment of a rotor yoke in accordance with embodiments of the present disclosure.

### DETAILED DESCRIPTION

Reference now will be made in detail to embodiments of the present invention, one or more examples of which are illustrated in the drawings. The word "exemplary" is used herein to mean "serving as an example, instance, or illustration." Any implementation described herein as "exemplary" is not necessarily to be construed as preferred or advantageous over other implementations. Moreover, each example is provided by way of explanation, rather than limitation of, the technology. In fact, it will be apparent to those skilled in the art that modifications and variations can be made in the present technology without departing from the scope or spirit of the claimed technology. For instance, features illustrated or described as part of one embodiment can be used with another embodiment to yield a still further embodiment. Thus, it is intended that the present disclosure covers such modifications and variations as come within the scope of the appended claims and their equivalents. The detailed description uses numerical and letter designations to refer to features in the drawings. Like or similar designations in the drawings and description have been used to refer to like or similar parts of the invention.

As used herein, the terms "first", "second", and "third" may be used interchangeably to distinguish one component from another and are not intended to signify location or importance of the individual components. The singular forms "a," "an," and "the" include plural references unless the context clearly dictates otherwise. The terms "coupled," "fixed," "attached to," and the like refer to both direct coupling, fixing, or attaching, as well as indirect coupling, fixing, or attaching through one or more intermediate components or features, unless otherwise specified herein. As used herein, the terms "comprises," "comprising," "includes," "including," "has," "having" or any other variation thereof, are intended to cover a non-exclusive inclusion. For example, a process, method, article, or apparatus that comprises a list of features is not necessarily limited only to those features but may include other features not expressly listed or inherent to such process, method, article, or apparatus. Further, unless expressly stated to the contrary, "or" refers to an inclusive- or and not to an exclusive- or. For example, a condition A or B is satisfied by any one of the following: A is true (or present) and B is false (or not present), A is false (or not present) and B is true (or present), and both A and B are true (or present).

Terms of approximation, such as "about," "generally," "approximately," or "substantially," include values within ten percent greater or less than the stated value. When used in the context of an angle or direction, such terms include within ten degrees greater or less than the stated angle or direction. For example, "generally vertical" includes directions within ten degrees of vertical in any direction, e.g., clockwise or counter-clockwise.

When used to describe a shape, the term "generally" is used to describe an object having the overall appearance of a shape and may include slight deviations from the exact shape, such as including one or more protrusions or indentations in the outline of the shape. For example, the term "generally circular" may be used to describe an object having the overall appearance of a circle but may include one or more slight indentations and/or protrusions about the circumference of the circle that are small, e.g., less than ten percent, relative to the circle's overall diameter. The term "generally cylindrical" may be used to describe an object having the overall appearance of a cylinder but may have a generally circular (as defined in the previous sentence) profile along the length of the cylinder.

Benefits, other advantages, and solutions to problems are described below with regard to specific embodiments. However, the benefits, advantages, solutions to problems, and any feature(s) that may cause any benefit, advantage, or solution to occur or become more pronounced are not to be construed as a critical, required, or essential feature of any or all the claims.

In general, a rotor and an electric motor assembly including the rotor are provided, in which the rotor includes a yoke having rectangular cut-out sections for receiving rectangular shaped permanent magnets and flat protrusions extending between each of the permanent magnets. The permanent magnets may be non-rare earth magnets, e.g., ferrite magnets. The yoke is formed from a stack of laminations of magnetically susceptible material and is exposed on an outer surface thereof to form a sleeveless motor. The present inventors have found that the specific arrangement of the sleeveless motor including the rotor having a yoke formed from laminations, rectangular cut-out sections and flat protrusions has resulted in an electric motor assembly that has reduced core loss and leakage flux, while improving the ease of manufacture of the rotor and reducing the cost of materials.

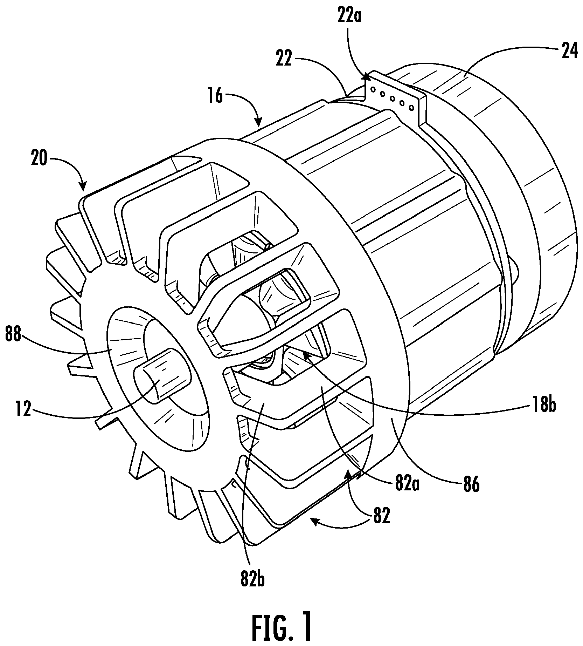

Referring now to the drawings, FIG. 1 illustrates a perspective view of an electric motor assembly 10 according to an embodiment of the present invention. The electric motor assembly 10 includes a motor shaft 12 extending along a longitudinal axis L. The motor shaft 12 is configured to be coupled to a drive mechanism (not shown) of a tool or machine at a free end 14 of the motor shaft 12. The motor shaft 12 is coupled to a rotor 16 at an end opposite the free end 14. The electric motor assembly 10 further includes a stator 18, a fan 20, a printed circuit board (PCB) 22, and a mount 24 coaxially arranged along the longitudinal axis L. Each of the stator 18, the fan 20, the PCB 22 and the mount 24 may include a central opening therethrough that is configured to receive the motor shaft 12.

As illustrated in FIG. 1, the electric motor assembly 10 may have a configuration known as an outer rotor motor. In other words, the rotor 16 may surround the stator 18 along the longitudinal axis L, i.e., the motor shaft 12. However, the present invention contemplates incorporating analogous features of the rotor 16 to be described into an electric motor configured as an internal rotor motor.

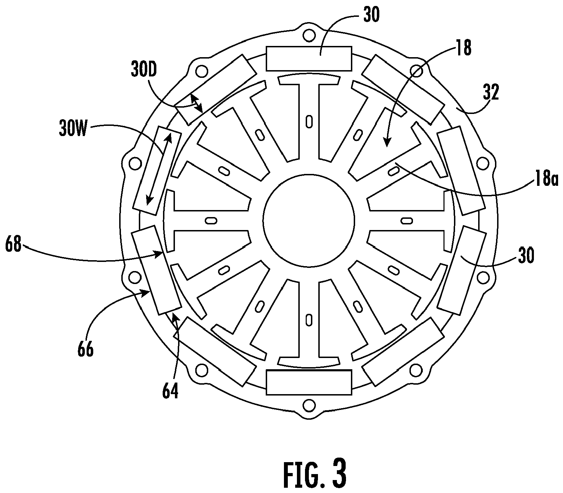

The stator 18 includes a plurality of teeth 18a extending in a radial direction (as shown in FIG. 3). There are coils or windings 18b wound on each of the teeth 18a in a concentrated manner. The teeth 18a may be evenly radially distributed about a central axis that is coaxial with the longitudinal axis L.

The PCB 22 may be disposed adjacent to one end of the stator 18 along the longitudinal axis L. The PCB 22 is electrically coupled to a controller (not shown). The PCB may include a projection 22a configured to receive and/or couple with one or more electrical wires (not shown) to couple to the controller. The windings 18b are electrically coupled to the PCB 22 and are configured to be electrically energized during operation of the electric motor assembly 10 such that electrical current flows through the windings 18b. Heat is produced when the electrical current flows through the windings 18b of the stator 18.

The rotor 16 includes a plurality of permanent magnets 30 mounted to a yoke 32. Each permanent magnet 30 may be a non-rare earth magnet. For instance, each permanent magnet 30 may be a ferrite magnet. Each permanent magnet 30 may have a rectangular cross-sectional shape. For instance, each permanent magnet 30 may have a rectangular prism shape with a longest dimension extending along the longitudinal axis L.

The yoke 32 may have a generally cylindrical shape having an outer peripheral surface 34. The yoke 32 has a cavity 36 extending therethrough along the longitudinal axis L. The cavity 36 is defined by an inner peripheral surface 38 of the yoke 32. The yoke 32 extends from a first end 40 to a second end 42 along the longitudinal axis L. The cavity 36 is configured to receive the motor shaft 12 and the stator 18 therein.

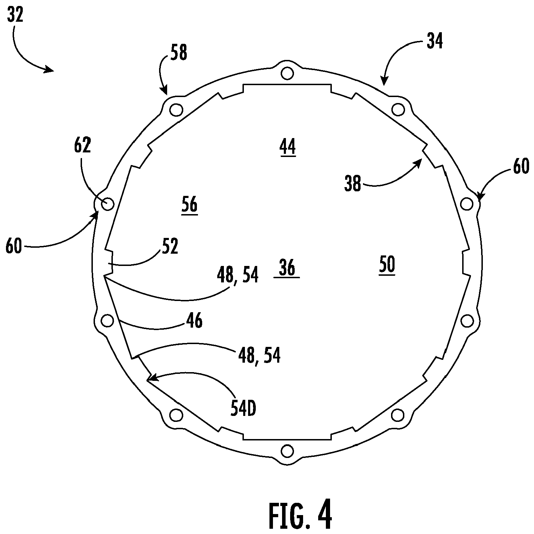

The yoke 32 may be formed from a laminate structure. In other words, the yoke 32 may be formed from a plurality of laminations 70 each having the same generally circular cross-sectional shape as shown in FIG. 4. The laminations 70 are stacked together along the longitudinal axis L to form the generally cylindrical shaped yoke 32 as illustrated in FIG. 1. The laminations 70 are formed from a magnetically conductive material. For instance, the laminations may be formed from silicon steel.

The inner peripheral surface 38 of the yoke 32 includes a plurality of rectangular cut-out sections 44. Each rectangular cut-out section 44 is configured to receive a respective permanent magnet 30 therein. Each rectangular cut-out section 44 includes a back surface 46 and two side surfaces 48. The side surfaces 48 extend perpendicular to the back surface 46 to form the rectangular shape of the rectangular cut-out sections 44. The side surfaces 48 extend radially inward toward the longitudinal axis L.

The inner peripheral surface 38 of the yoke 32 further includes a plurality of protrusions 50. For instance, one or more of the protrusions 50 may be formed in between rectangular cut-out sections 44. As illustrated in FIGS. 3-4, the rectangular cut-out sections 44 and protrusions 50 may be disposed in alternating fashion around the inner peripheral surface 38 of the yoke 32. Each protrusion 50 may be formed by a front surface 52 and two side surfaces 54. The front surface 52 may be disposed perpendicular to the side surfaces 54 to form a flat surface facing inward from the yoke 32. As illustrated in FIGS. 3-4, the side surfaces 54 of each protrusion 50 may coincide with side surfaces 48 of two adjacent rectangular cut-out sections 44 on either side of the protrusion 50.

Each permanent magnet 30 may be disposed in a respective one of the rectangular cut-out sections 44. Side surfaces 64 of each permanent magnet 30 may contact the side surfaces 48 of the rectangular cut-out section 44. Described differently, a width 30W of each permanent magnet 30 may be approximately equal to or very slightly less than a width 44W of each rectangular cut-out section 44 such that the side surfaces 64 of the magnet 30 contact the side surfaces 48 of the respective rectangular cut-out section 44, i.e., the side surfaces 54 of adjacent protrusions 50. Thus, each permanent magnet 30 may be easily placed and held or fixed into place within each rectangular cut-out section 44. The permanent magnet 30 may be mounted within the rectangular cut-out section 44 with an adhesive. The adhesive may adhere a back side 66 of the permanent magnet 30 to the back surface 46 of the rectangular cut-out section 44.

When the permanent magnets 30 are mounted within the rectangular cut-out sections 44 of the yoke 32, the protrusions 50 are disposed between each respective magnet 30. Each permanent magnet 30 may have a depth 30D in a radial direction that is greater than a depth 54D along each of the sides 54 of the protrusions 50. As illustrated in FIG. 3, the permanent magnets 30 extend further within the cavity 36 than the protrusions 50. When the stator 18 is disposed within the cavity 36 as, a front surface 68 of each of the permanent magnets 30 may be positioned facing the stator 18 and may be disposed adjacent to the stator 18. The front surface 68 is spaced apart from the stator 18 in a radial direction.

During operation of the electric motor assembly 10, the windings 18b of the stator 18 are energized and generate a magnetic circuit with the permanent magnets 30. As in any magnetic circuit, there may be some amount of leakage flux, i.e., the part of magnetic flux that does not follow the desired path in the magnetic circuit. The present inventors have found that the flat shape of the front surface 52 of the protrusion 50 between adjacent permanent magnets 30, as illustrated in FIG. 3, improves the function of the electric motor assembly 10 by reducing leakage flux during operation of the electric motor assembly 10 compared to alternative protrusions having, e.g., a V-shape, M-shape, W-shape or other non-flat surface between the permanent magnets 30 and facing the stator 18.

In an embodiment, the yoke 32 may further include a plurality of holes 56 extending therethrough, as illustrated in FIGS. 3-4. The holes 56 may be disposed about a circumference of the yoke 32 between the outer peripheral surface 34 and the inner peripheral surface 38. The outer peripheral surface 34 of the yoke 32 may have a plurality of surface features, e.g., a rounded protrusion 58 corresponding to each respective one of the holes 56. For instance, each of the holes 56 may have a circular shape as shown in FIGS. 3-4 (i.e., forming circular holes 56), and the rounded protrusion 58 may have a rounded shape corresponding to a portion of the circular hole 56 protruding from the outer peripheral surface 34. Each rounded protrusion 58 may extend between the first end 40 and the second end 42 parallel to the longitudinal axis L. The holes 56 may be disposed circumferentially about the yoke 32, e.g., evenly distributed about the longitudinal axis L. In some aspects, each hole 56 may be aligned with a respective rectangular cut-out section 44.

The plurality of holes 56 may be provided to accommodate a rotor interlock 60. The rotor interlock 60 may be configured to hold the plurality of laminations 70 together. The rotor interlock 60 may comprise a plurality of fasteners 62 or other suitable interlocking elements configured to hold the laminations 70 together.

The present invention further contemplates additional or alternative means to couple the laminations together. For example, the laminations 70 may be coupled together with an adhesive such as glue. More than one means of coupling the laminations 70 may be provided, e.g., both the rotor interlock 60 and glue.

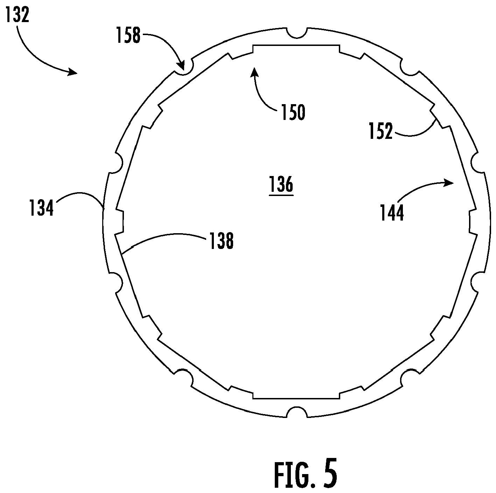

In one aspect, the yoke 32 may not have holes 56 and a rotor interlock 60 as described above. As previously described, the laminations 70 may be coupled together by alternative means such as glue to form the yoke 32. For instance, an embodiment of a yoke 132 is illustrated in FIG. 5. The yoke 132 has a generally circular outer circumferential shape similar to the yoke 32. However, the yoke 132 does not include rounded protrusions 58. The yoke 132 further includes cuttings 158 cut radially inward from the generally circular outer circumferential shape to form a plurality of surface features. In one aspect, as illustrated in FIG. 5, the cuttings 158 may be evenly distributed about the circumference of the yoke 132. In some aspects, each cutting 158 may be aligned with a respective rectangular cut-out section 144. The cuttings 158 may be semicircular shaped or any other suitable shape. When the laminations are stacked to form the yoke, the cuttings 158 may form a channel extending along the axial length of the yoke 132 parallel to the longitudinal axis L. The cuttings 158 may reduce the overall mass of the yoke 132 and thereby the rotor 16 and the electric motor assembly 10 as a whole. By reducing the mass of the rotor 16, the braking torque for the motor may be reduced. Moreover, the cuttings 158 may be implemented to perform rotor balancing. The cuttings 158 have minimal to no effect on the magnetic circuit of the electric motor assembly 10 because they are on the outer peripheral side of the rotor 16.

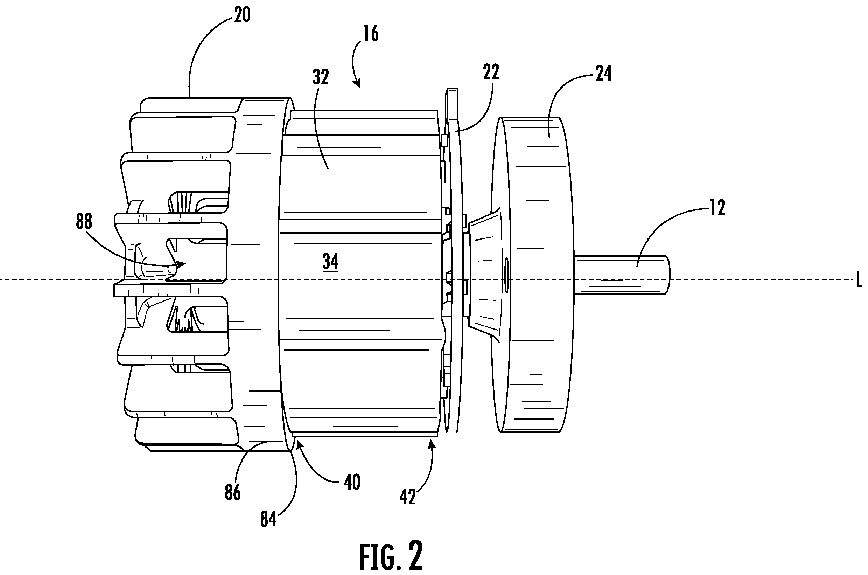

Regardless of the particular structure of the yoke 32, the rotor 16 further includes an end cap in the form of a fan 20. The fan 20 has a base 80 and a plurality of fan blades 82, also referred to as vanes, extending from the base 80. As shown in FIGS. 1-2, the base 80 has a first side surface 84 configured to be disposed adjacent to the first end 40 of the rotor yoke 32. The base 80 has an outer circumferential surface 86 extending away from the first side surface 84 in the longitudinal direction. The fan blades 82 extend from the first side surface 84 in a direction away from the first side surface 84 and have a first blade portion 82a that extends parallel to the longitudinal axis L and a second blade portion 82b that extends towards the longitudinal axis L, e.g., in a generally radial direction, to a fan hub 88.

In the electric motor assembly 10, the rotor 16 may be coupled to the fan 20 such that the fan 20 forms an end cap of the rotor 16. For instance, the first side surface 84 of the base may be coupled to the first end 40 of the rotor 16, e.g., by coupling a radial surface of the yoke 32 at the first end 40 to the first side surface 84 of the fan base 80. Further, the motor shaft 12 is configured to extend through the fan hub 88, thereby coupling the motor shaft 12 with the rotor 16 through the end cap formed by the fan 20. This arrangement operatively enables the motor shaft 12 to rotate with rotation of the rotor 16 when the electric motor assembly 10 is in operation. The rotation of the fan 20 coincident with rotation of the rotor 16 may cause airflow that may have a cooling effect on the electric motor assembly 10, particularly cooling the heat generated when electrical current flows through the windings 18b of the stator 18 as described above.

At an opposite end of the electric motor assembly 12 from the fan 20 along the longitudinal axis L, the electric motor assembly 10 may include a mount 24. The mount 24 receives the motor shaft 12 through a central opening thereof. The mount 24 may be used to mount the electric motor assembly 10 within a tool, e.g., a power tool driven by operation of the electric motor assembly 10. Additionally or alternatively, the mount 24 may have one or more of the PCB 22 and/or the stator 18 mounted or coupled thereto to provide stability to those non-rotating structures of the electric motor assembly 10.

Turning back to FIG. 1, the electric motor assembly 10 can be known as a sleeveless brushless motor. In other words, an outer surface of the rotor 16 may be exposed, as will be described in further detail below, and the electric motor assembly 10 does not include any sleeve or housing surrounding the rotor 16 and stator 18. As such, the yoke 32 of the rotor 16 may have an exposed outer peripheral surface 34. In this regard, the electric motor assembly 10 of the present invention may have significant advantages of being lighter weight, lower cost of manufacture (due to cost of materials and assembly), and more efficient by not having an extra sleeve or housing that could impact the magnetic field of the motor assembly, as compared to sleeved brushless motors. In particular, the electric motor assembly 10 of the present invention may have lower core loss as compared to a motor having a solid rotor housing, e.g., a sleeved brushless motor, because a sleeved brushless motor may cause more frequent variation of the magnetic flux of the rotor.

The operation of the brushless DC motor, i.e., the electric motor assembly 10, described above is similar to conventional brushless DC motors as would be appreciated by persons skilled in the art based on the structures of the motor described above. Therefore it will not be described in further detail here.

Further aspects of the invention are provided by one or more of the following embodiments:

A rotor includes a yoke, and a plurality of magnets held by the yoke. The yoke is formed from a plurality of laminations. The yoke includes an inner peripheral surface surrounding a cavity. The inner peripheral surface has a plurality of rectangular cut-out sections that are each configured to receive a respective magnet of the plurality of magnets. The inner peripheral surface further includes a protrusion extending toward the cavity, and each protrusion having a flat surface facing the cavity.

The rotor of any one or more of the embodiments, wherein each of the plurality of magnets is a non-rare earth magnet.

The rotor of any one or more of the embodiments, wherein each of the plurality of magnets is a ferrite magnet.

The rotor of any one or more of the embodiments, wherein each magnet is held within its respective rectangular cut-out section of the yoke between side surfaces of adjacent protrusions of the yoke.

The rotor of any one or more of the embodiments, wherein each magnet contacts the side surfaces of adjacent protrusions of the yoke.

The rotor of any one or more of the embodiments, wherein each of the plurality of magnets comprises a rectangular cross-sectional shape.

The rotor of any one or more of the embodiments, wherein the yoke further comprises a plurality of circular holes disposed circumferentially about the cavity, wherein each of the plurality of circular holes is configured to accommodate a rotor interlock therethrough to hold the laminations together.

The rotor of any one or more of the embodiments, wherein an outer peripheral surface of the yoke comprises a plurality of surface features extending along an axial length of the yoke.

The rotor of any one or more of the embodiments, wherein each of the plurality of surface features comprises a rounded protrusion extending axially along the axial length of the yoke.

The rotor of any one or more of the embodiments, wherein each of the plurality of surface features is a channel extending along the axial length of the yoke.

An electric motor assembly includes a motor shaft; a printed circuit board (PCB); a stator; and a rotor fixed to the motor shaft. The rotor includes a yoke, and a plurality of magnets held by the yoke. The yoke is formed from a plurality of laminations. The yoke includes an inner peripheral surface surrounding a cavity. The inner peripheral surface has a plurality of rectangular cut-out sections that are each configured to receive a respective magnet of the plurality of magnets. The inner peripheral surface further includes a protrusion extending toward the cavity, and each protrusion having a flat surface facing the cavity.

The electric motor assembly of any one or more of the embodiments, wherein each of the plurality of magnets is a non-rare earth magnet.

The electric motor assembly of any one or more of the embodiments, wherein each of the plurality of magnets is a ferrite magnet.

The electric motor assembly of any one or more of the embodiments, wherein each magnet is held within its respective rectangular cut-out section of the yoke between side surfaces of adjacent protrusions of the yoke.

The electric motor assembly of any one or more of the embodiments, wherein each of the plurality of magnets comprises a rectangular cross-sectional shape.

The electric motor assembly of any one or more of the embodiments, further comprising a fan coupled to the yoke, wherein the motor shaft extends through a central opening of the fan and the fan is configured to rotate with the rotor.

The electric motor assembly of any one or more of the embodiments, wherein the fan comprises a fan base, the fan base having a first side in contact with the yoke and a second side having a plurality of vanes extending therefrom.

The electric motor assembly of any one or more of the embodiments, wherein the fan, rotor, and the PCB are axially arranged along the motor shaft.

The electric motor assembly of any one or more of the embodiments, wherein the yoke has an exposed outer peripheral surface such that the electric motor assembly is sleeveless.

The electric motor assembly of any one or more of the embodiments, wherein an outer peripheral surface of the yoke comprises a plurality of surface features extending along an axial length of the yoke.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they include structural elements that do not differ from the literal language of the claims, or if they include equivalent structural elements with insubstantial differences from the literal language of the claims.

## Claims

1. A rotor for an electric motor comprising: a yoke, and a plurality of magnets held by the yoke, wherein the yoke is formed from a plurality of laminations and comprises an inner peripheral surface surrounding a cavity, the inner peripheral surface having a plurality of rectangular cut-out sections, each rectangular cut-out section configured to receive a respective magnet of the plurality of magnets, wherein the inner peripheral surface further comprises a protrusion extending toward the cavity, each protrusion having a flat surface facing the cavity.

2. The rotor of claim 1, wherein each of the plurality of magnets is a non-rare earth magnet, preferably wherein each of the plurality of magnets is a ferrite magnet.

3. The rotor of claims 1 or 2, wherein each magnet is held within its respective rectangular cut-out section of the yoke between side surfaces of adjacent protrusions of the yoke, preferably wherein each magnet contacts the side surfaces of adjacent protrusions of the yoke.

4. The rotor of any one of claims 1-3, wherein each of the plurality of magnets comprises a rectangular cross-sectional shape.

5. The rotor of any one of claims 1-4, wherein the yoke further comprises a plurality of circular holes disposed circumferentially about the cavity, wherein each of the plurality of circular holes is configured to accommodate a rotor interlock therethrough to hold the laminations together.

6. The rotor of any one of claims 1-5, wherein an outer peripheral surface of the yoke comprises a plurality of surface features extending along an axial length of the yoke.

7. The rotor of claim 6, wherein each of the plurality of surface features comprises a rounded protrusion extending axially along the axial length of the yoke.

8. The rotor of claim 6, wherein each of the plurality of surface features is a channel extending along the axial length of the yoke.

9. An electric motor assembly comprising: a motor shaft; a printed circuit board (PCB); a stator; and the rotor of any one of claims 1-8.

10. The electric motor assembly of claim 9, further comprising a fan coupled to the yoke, wherein the motor shaft extends through a central opening of the fan and the fan is configured to rotate with the rotor.

11. The electric motor assembly of claim 10, wherein the fan comprises a fan base, the fan base having a first side in contact with the yoke and a second side having a plurality of vanes extending therefrom.

12. The electric motor assembly of claim 10, wherein the fan, rotor, and the PCB are axially arranged along the motor shaft.

13. The electric motor assembly of claim 9, wherein the yoke has an exposed outer peripheral surface such that the electric motor assembly is sleeveless.

14. The electric motor assembly of claim 9, wherein an outer peripheral surface of the yoke comprises a plurality of surface features extending along an axial length of the yoke.
